# DEMANDE DE BREVET EUROPEEN

(11) **EP 1 739 364 A2**
(43) Date de publication de la demande: **03.01.2007**
(21) Numéro de dépôt: 06356080.9
(22) Date de dépôt: 28.06.2006
(51) Int. Cl.: F24C 15/32, A21B 3/04

(54) **Four comportant un dispositif d'évaporation d'eau**

(30) Priorité: 01.07.2005 FR 0507012
(71) Demandeur: SEB SA, 69130 Ecully (FR)
(72) Inventeur: Valance, Nicolas, 88000 Epinal (FR); Antoine, Eric, 88370 Bellefontaine (FR); Wilhelm, Patrick, 88200 Dommartin les Remiremont (FR)
(74) Mandataire: Kiehl, Hubert

(57) **Abrégé**

La présente invention concerne un four électroménager comprenant au moins une résistance chauffante située sous la voûte (13) de l'appareil et un évaporateur d'eau (1), le four est caractérisé par le fait que ledit évaporateur d'eau (1) est positionné dans la partie haute de l'appareil, entre la résistance de voûte (12) et la voûte (13) du four et par le fait que l'évaporateur (1) comporte au moins une zone en dépression servant de réceptacle pour l'eau d'évaporation.

## Description

L'invention concerne un four électroménager pourvu d'un plateau évaporateur d'eau.

Les fours électroménagers fonctionnant sur le principe d'une production de chaleur au moyen de résistances chauffantes disposées au niveau de la voûte et de la sole du four sont désormais classiques et connus depuis longtemps. Ces appareils disposent de réglages multiples permettant le chauffage des aliments par le dessus ou par le dessous indépendamment ou en combinaison et il est connu d'intégrer dans l'ensemble un système de circulation d'air de manière à homogénéiser la température et répartir le chauffage dans le volume.

Les résistances chauffantes peuvent fonctionner pour cuire, griller ou simplement réchauffer les aliments de façon satisfaisante. Toutefois il se trouve de nombreuses situations où la chaleur importante nécessaire à la cuisson dessèche les aliments et en modifie la texture, les rendant peu appétissants, voire difficiles à manger.

La chaleur sèche développée par les fours traditionnels provoque une fusion rapide des graisses superficielles des aliments alors que le coeur de l'aliment n'est pas atteint, le gradient de température entre l'intérieur et l'extérieur de l'aliment est trop important ce qui induit une cuisson hétérogène et dans certains cas une perte de tendreté des viandes. Il arrive aussi occasionnellement que la peau soit carbonisée alors que l'intérieur n'est pas cuit.

La dessiccation pose problème notamment lorsqu'il s'agit de réchauffer des aliments déjà cuits, de cuire pendant un temps assez long des viandes au tournebroche, de chauffer des gratins, du riz et des aliments nécessitant une teneur en eau élevée ou encore de cuire des poissons. Dans ces situations, et dans de nombreuses autres, le four traditionnel diminue de façon excessive la teneur en eau des aliments.

Pour tenter de résoudre ce problème de perte d'humidité à la cuisson il est classiquement connu de verser de l'eau dans la sole pour créer une teneur en vapeur à l'intérieur du four, cette solution a été proposée notamment dans le document US 4 810 856.

Ce moyen permet effectivement de réduire la perte en eau des aliments et favorise une cuisson plus rapide et plus homogène des aliments. Toutefois ce dispositif présente plusieurs inconvénients notables, notamment le jus de cuisson des aliments se mélange avec l'eau d'évaporation dans la sole et rend celui-ci inutilisable pour des sauces, par ailleurs le gras brûlant provoque en tombant dans l'eau des projections, lesquelles projections peuvent être dangereuses pour le cuisinier lorsqu'il réapprovisionne le four en eau d'évaporation.

De plus ledit réapprovisionnement en eau d'évaporation nécessite l'ouverture complète du four ce qui entraîne une chute brutale de la température préjudiciable à la cuisson, en plus des risques de brûlure.

Un autre inconvénient lié au remplissage de la sole en eau est la déstabilisation de la régulation de la température du four car celle-ci est généralement disposée à ce niveau. La présence d'eau sur la sole et le remplissage en eau en cours de cuisson perturbent fortement la mesure de température qui entraîne une réaction erronée de la régulation.

L'invention a pour objectif de résoudre les principales difficultés énoncées précédemment en proposant un four comportant un évaporateur ne générant pas une augmentation du volume de l'appareil.

La présente invention concerne un four électroménager comprenant au moins une résistance chauffante située sous la voûte de l'appareil et un évaporateur d'eau, le four est caractérisé par le fait que ledit évaporateur d'eau est positionné entre la résistance de voûte et la voûte du four, et par le fait que l'évaporateur comporte au moins une zone en dépression servant de réceptacle pour l'eau d'évaporation.

Les avantages liés à une cuisson avec une chaleur humide selon l'invention sont multiples, les problèmes de dessiccation des aliments sont favorablement résolus, la cuisson est plus homogène et plus rapide du fait de la meilleure conduction thermique de la vapeur. Les aliments sont cuits à coeur sans que la périphérie soit dégradée par une température excessive.

Les préparations culinaires basées sur les pâtes, le riz, les légumes et autres aliments à forte teneur en eau cuisent ou sont réchauffées sans perte d'humidité préjudiciable à leur texture et sans perte de saveur.

Par rapport à l'art antérieur connu et notamment comparativement à l'utilisation de la sole comme réceptacle d'eau la disposition de l'évaporateur dans le four est particulièrement favorable sur plusieurs points :
- Le positionnement en dessus de la résistance de voûte améliore la sécurité des utilisateurs puisqu'il n'est pas nécessaire d'ouvrir complètement le four pour remplir d'eau l'évaporateur, lesdits utilisateurs sont ainsi protégés des projections éventuelles et ne sont pas exposés à la forte chaleur du four.
- Dans la configuration de l'invention la sole du four est pleinement utilisable pour la récupération des jus de cuisson.
- Le positionnement et la conformation de l'évaporateur sont également favorables à la production de vapeur de manière efficace sans nuire au transfert de chaleur dans le volume du four.
- La conformation de l'évaporateur, qui enrobe la résistance chauffante, permet d'adjoindre une fonctionnalité supplémentaire au four électroménager sans augmentation du volume de l'appareil pour un volume utile équivalent.
- Le positionnement de l'évaporateur au-dessus de la résistance de voûte du four ne perturbe pas la régulation de température du four (lorsque celle-ci est située sur la résistance de sole) qui peut ainsi fonctionner avec ou sans évaporateur avec des performances identiques.

D'autres caractéristiques et avantages de l'invention se dégageront de la description qui va suivre en regard des dessins annexés qui ne sont donnés qu'à titre d'exemples non limitatifs.
La figure 1 est une vue de dessus en perspective d'un four électroménager selon l'invention.
La figure 2 est une vue de dessous du four dans laquelle la porte a été enlevée.
La figure 3 est une vue de dessus d'un évaporateur d'eau incorporé dans un four selon l'invention.
La figure 4 est une vue en perspective de l'évaporateur dans laquelle le distributeur d'eau est en position ouverte.
La figure 5 illustre l'évaporateur avec le distributeur d'eau en position repliée.

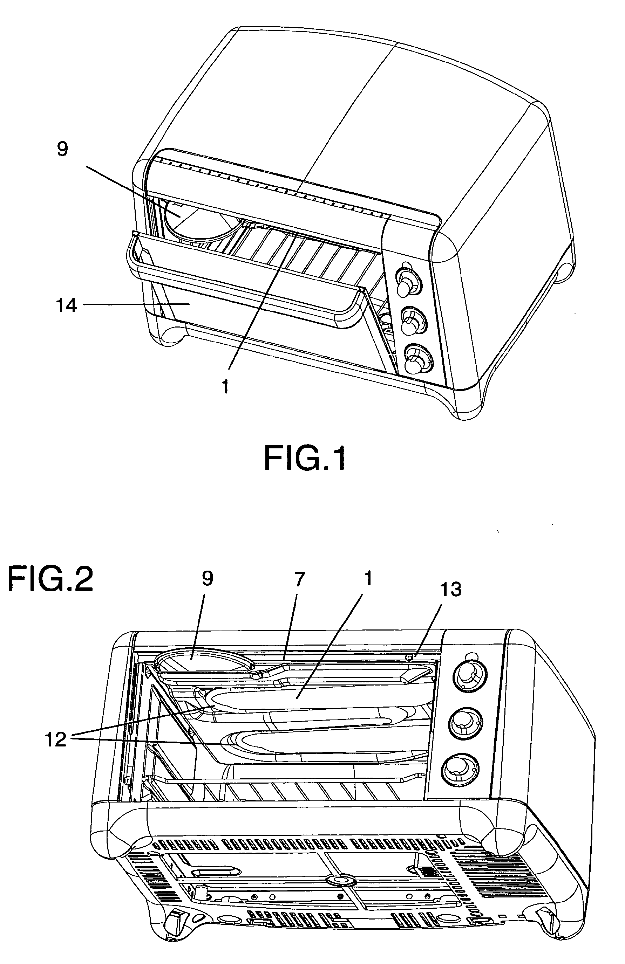

Les figures 1 et 2 montrent le four électroménager selon un exemple avantageux de réalisation de l'invention. Ledit four électroménager possède un plateau évaporateur 1 positionné entre la résistance chauffante de voûte 12 et la voûte 13 du four, soit donc dans la partie supérieure de l'appareil.

Ces figures 1 et 2 présentent également le positionnement du distributeur d'eau 9 en position ouverte et le placement dudit distributeur et du plateau évaporateur 1 par rapport à la porte du four 14.

Le plateau évaporateur 1 illustré sur les différentes figures selon une variante préférée de l'invention comporte au moins une zone en dépression servant de réceptacle pour l'eau d'évaporation.

De préférence l'évaporateur comporte au moins une zone en dépression conformée de manière à utiliser au moins un espace laissé libre par la résistance de voûte sous-jacente.

Par rapport à l'horizontale et positionné dans le four ledit plateau évaporateur 1 comporte de préférence plusieurs zones en dépression 2, 3 et 4 pouvant éventuellement communiquer entre elles ou se remplir par débordement d'une zone dans une autre.

De façon préférée selon l'invention le plateau évaporateur est formé par emboutissage d'une plaque métallique, par exemple en aluminium, de manière à créer un relief épousant la forme de la résistance chauffante de voûte 12.

Lorsque l'évaporateur 1 est positionné dans le four électroménager, sur des rails ou des appuis ponctuels ménagés sur les parois latérales du four, tel que cela est illustré sur la figure 2, la résistance chauffante de voûte 12 en forme de serpentin est située sous les parties en relief 5 et 6 qui délimitent les zones en dépression 2, 3 et 4.

Préférentiellement, les zones en dépression 2, 3, 4 de l'évaporateur 1 sont conformées de manière à s'adapter complètement à la résistance de voûte 12 pour utiliser l'ensemble des espaces laissés libres par ladite résistance.

Le niveau haut de l'évaporateur est placé au plus près de la voûte du four alors que le niveau bas, correspondant au fond des zones en dépression, se situe de préférence à la hauteur de la résistance chauffante de manière à laisser celle-ci suffisamment dégagée pour que la chaleur puisse être délivrée de manière optimale. Il est toutefois parfaitement envisageable de réaliser l'évaporateur avec un niveau bas situé, soit au dessus, soit au dessous du plan défini par la résistance chauffante de voûte, afin d'ajuster le volume d'eau contenu dans l'évaporateur.

Un évaporateur qui enrobe de cette manière la résistance chauffante de voûte 12 occupe peu de place en hauteur et n'entraîne donc pas de modification des dimensions du four. Cette caractéristique est bien visible sur la figure 2.

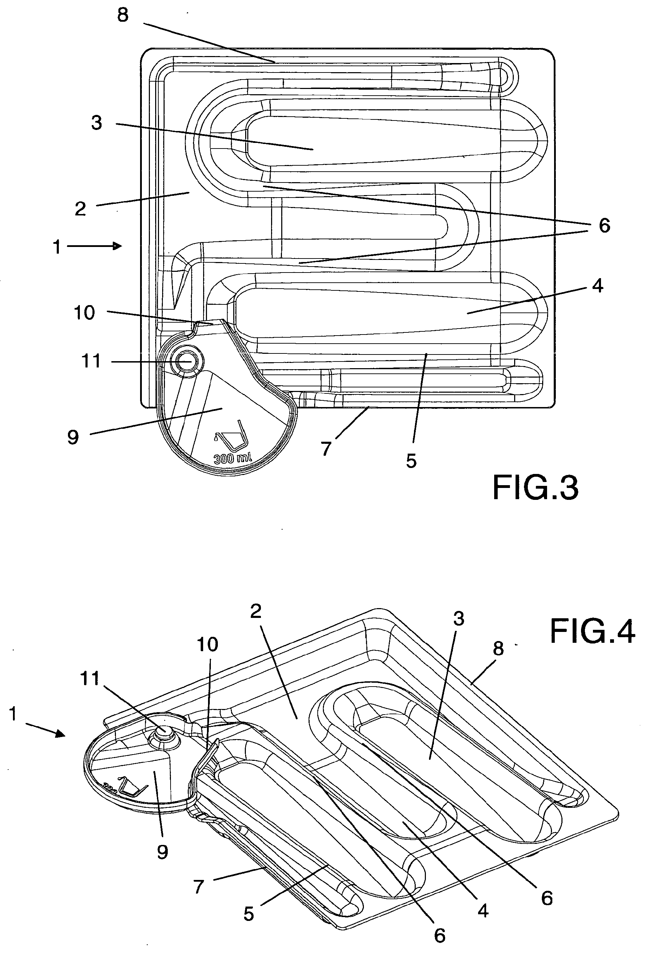

Tel que cela est illustré sur les différentes figures 3 à 5 les zones en dépression 2, 3 et 4, destinées à accueillir l'eau d'évaporation sont conformées pour que l'eau soit distribuée de manière homogène sur une grande proportion de la surface dudit évaporateur 1.

Préférentiellement, les zones en dépression de l'évaporateur, susceptibles de recevoir l'eau à évaporer, représentent au moins 20% de la surface de l'évaporateur 1.

Pour des fours de faible capacité, c'est-à-dire de 15 et 20 litres, la quantité d'eau pouvant être introduite dans l'évaporateur est d'au moins 50 ml et de préférence plus de 100 ml. Pour des fours de volumes plus importants l'évaporateur est conformé pour recevoir une plus grosse quantité de liquide.

Selon un mode de réalisation préférentiel correspondant aux figures illustratives, l'évaporateur est conçu pour évaporer 300 ml d'eau en une heure. Ces quantités d'eau peuvent être amenées à varier, selon la taille et la puissance du four, et selon les souhaits techniques et marketing de présence plus ou moins importante de vapeur dans l'enceinte du four. Il est donc tout à fait envisageable, dans le cadre de l'invention, de modifier certains paramètres liés à l'évaporateur pour, soit augmenter le débit de vapeur, soit le diminuer. On pourra jouer notamment sur la qualité du matériau utilisé, la profondeur des zones en dépression, la surface spécifique d'échange thermique,...

Selon l'invention l'eau d'évaporation peut être amenée dans l'évaporateur de différentes manières et notamment au moyen d'un distributeur 9.

Le distributeur 9 est de préférence situé dans un angle ou sur le côté avant 7 de l'évaporateur, en regard de la porte du four 14, tel que cela est illustré sur les figures 1 et 2, mais pourra également être disposé sur le dessus ou sur le côté, pour des raisons techniques ou esthétiques.

Selon une variante illustrée sur les différentes figures, le distributeur 9 est conformé en réservoir plat ou avec un fond très légèrement conique disposant d'une ouverture 10 pour l'écoulement de l'eau vers les zones en dépression 2 et 4.

Le distributeur 9, tel que cela est illustré sur les figures 3 à 5, est articulé en rotation autour d'un axe 11 permettant de le faire pivoter entre une position ouverte pour le remplissage de l'évaporateur et une position fermée lorsque le four est en fonctionnement.

La position fermée est obtenue par pivotement du distributeur 9 autour de l'axe 11 vers l'intérieur du four.

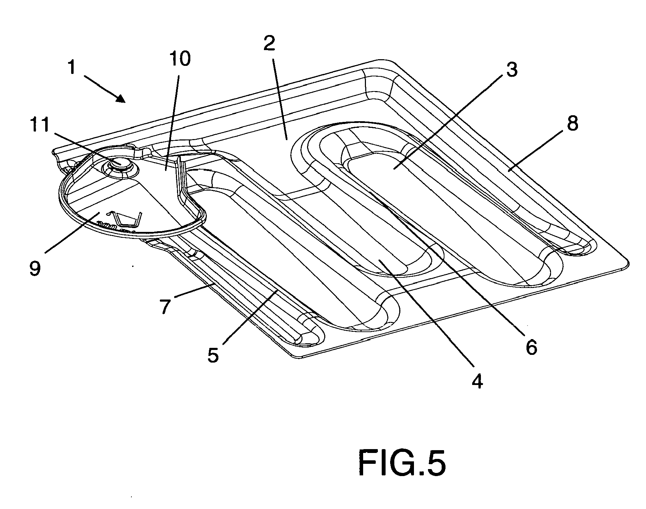

La position ouverte du distributeur est représentée sur les figures 1, 2, 3 et 4 et la position fermée est illustrée sur la figure 5.

Les dimensions du plateau évaporateur sont définies de manière à ce que le côté avant 7, en regard avec la porte du four 14 fermée, soit aussi proche que possible de ladite porte.

Préférentiellement, la profondeur de l'évaporateur est plus faible que la profondeur du four, de manière à ménager un espace, préférentiellement au fond du four, de passage privilégié de la vapeur produite par l'évaporateur. Le côté arrière 8 de l'évaporateur, n'est ainsi pas appuyé sur le fond du four. Selon une mise en oeuvre optimisée de l'invention, l'espace ménagé au fond du four entre la paroi verticale arrière et l'évaporateur est de l'ordre de 1 à 2 cm. Un espace, de l'ordre du cm, est également ménagé entre l'évaporateur et les parois latérales.

Compte tenu des mouvements naturels de l'air, et notamment des mouvements liés à la convection, il n'est pas nécessaire de réaliser une surpression au niveau de l'évaporateur pour assurer la diffusion de la vapeur.

Cette configuration de circulation de la vapeur permet aux utilisateurs d'éviter des brûlures lorsque de l'eau doit être amenée dans l'évaporateur ou lorsque la porte du four est ouverte.

Diverses variantes sont envisageables pour amener l'eau dans les zones en dépression 2, 3, 4, notamment l'évaporateur peut être conçu avec un certain débattement au niveau de l'ajustement avec la résistance chauffante de voûte 12. Il peut ainsi coulisser ou glisser vers l'avant, soit manuellement, soit de manière automatique, l'évaporateur étant alors légèrement tiré vers l'extérieur lorsque la porte du four 14 est entrebâillée, afin que le remplissage de l'eau puisse être effectué directement dans les zones en dépression les plus proches.

Selon d'autres variantes le distributeur peut se présenter sous la forme d'une extension rétractable sur le plateau, par coulissement, ou d'un entonnoir amené depuis l'extérieur et emboîtable dans l'évaporateur. De multiples dispositifs sont envisageables sans sortir du cadre de l'invention.

Il peut aussi être prévu d'amener l'eau au travers d'une fenêtre pivotante et au moyen d'un entonnoir déployable, laquelle fenêtre pouvant être aménagée dans la porte du four ou sur la paroi au-dessus de la porte.

Il pourra également être judicieux de prévoir une indication du niveau d'eau dans l'évaporateur, par tout dispositif connu en soi.

Il est également concevable, même si cela est plus coûteux, d'amener l'eau au moyen d'une tuyauterie reliée à un orifice de remplissage externe ou à un réservoir. Laquelle alimentation en eau pouvant être alors manuelle ou automatique au moyen d'une pompe. Il est aussi concevable d'imaginer un capteur de niveau intégré pour ajuster en permanence la hauteur d'eau dans l'évaporateur.

Pour toutes ces variantes de mises en oeuvre de l'invention, la résistance de voûte sera préférentiellement montée pivotante en se rabattant sur l'une des parois dudit four, permettant ainsi d'accéder facilement ou d'extraire entièrement le plateau pour le nettoyer notamment.

Un four tel que présenté dans l'invention est conçu et calculé pour aboutir à un produit électroménager de prix de revient très bas et de conception aussi robuste que possible, il est cependant envisageable, sans sortir du cadre de l'invention, de doter le four de capteurs et régulateurs permettant un ajustement fin de l'humidité dans le four en fonction de l'eau contenue dans l'évaporateur et d'éventuels régimes de chauffage préprogrammés. Ces régimes de chauffage peuvent être plus particulièrement adaptés pour la régulation de la résistance de voûte, de manière à répondre aux exigences de cuisson les plus délicates.

Plusieurs variantes du four électroménager sont possibles sans sortir du cadre de l'invention, il peut par exemple être envisagé d'installer un ventilateur permettant de faire circuler plus facilement la vapeur d'eau dans l'enceinte du four, il peut être également amené différents accessoires tels que des capteurs d'humidité, de niveau d'eau et associer ces éléments à des configurations de cuisson programmées ou asservies à un calculateur en fonction des aliments à cuire.

Il peut aussi être envisagé divers moyens permettant l'évacuation de l'eau résiduelle dans l'évaporateur après son fonctionnement, par exemple sous forme d'un orifice de vidange placé dans une des zones en dépression, ou par l'emploi d'un dispositif de pivotement de la résistance chauffante et du basculement du plateau évaporateur, tel que décrit précédemment, sans sortir du cadre de l'invention.

Le four selon l'invention peut aussi être conçu avec une résistance de voûte démontable permettant l'extraction et le nettoyage du plateau évaporateur.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Four électroménager comprenant au moins une résistance chauffante située sous la voûte (13) de l'appareil et un évaporateur d'eau (1), **caractérisé par le fait que** ledit évaporateur d'eau (1) est positionné entre la résistance de voûte (12) et la voûte (13) du four, et **par le fait que** l'évaporateur (1) comporte au moins une zone en dépression (2, 3, 4) servant de réceptacle pour l'eau d'évaporation.

2. Four électroménager selon la revendication précédente, dans lequel l'évaporateur (1) comporte au moins une zone en dépression (2, 3, 4) conformée de manière à utiliser au moins un espace laissé libre par la résistance de voûte (12) située en dessous.

3. Four électroménager selon la revendication 2 dans lequel les zones en dépression (2, 3, 4) de l'évaporateur sont conformées de manière à s'adapter complètement à la résistance de voûte (12) pour utiliser l'ensemble des espaces laissés libres par ladite résistance.

4. Four électroménager selon les revendications 1 à 3 dans lequel les zones en dépression (2, 3, 4) de l'évaporateur (1) sont conformées pour que l'eau soit distribuée de manière homogène sur une grande proportion de la surface dudit évaporateur (1).

5. Four électroménager selon l'une des revendications précédentes, dans lequel les zones en dépression de l'évaporateur, susceptibles de recevoir l'eau à évaporer, représentent au moins 20% de la surface de l'évaporateur (1).

6. Four électroménager selon l'une quelconque des revendications 2 à 5 dans lequel la partie basse de l'évaporateur (1) correspondant à au moins une zone en dépression (2, 3, 4) est située à la même hauteur que la résistance chauffante de voûte (12).

7. Four électroménager selon l'une quelconque des revendications 2 à 5 dans lequel la partie basse de l'évaporateur (1) correspondant à au moins une zone en dépression (2, 3, 4) est située sous le plan défini par la résistance chauffante de voûte (12).

8. Four électroménager selon l'une quelconque des revendications précédentes dans lequel les zones en dépression (2, 3, 4) peuvent contenir un volume d'eau d'évaporation d'au moins 50 ml et de préférence plus de 100 ml.

9. Four électroménager selon l'une quelconque des revendications précédentes dans lequel l'eau d'évaporation est amenée sur l'évaporateur (1) au moyen d'un distributeur (9).

10. Four électroménager selon la revendication 9 dans lequel le distributeur (9) est situé dans un angle ou sur le côté avant (7) de l'évaporateur (1) en regard de la porte du four (14).

11. Four électroménager selon l'une des revendications 1 ou 2, dans lequel le plateau évaporateur (1) est monté coulissant sur des rails disposés sur les parois latérales du four.

12. Four électroménager selon l'une des revendications précédentes, dans lequel la résistance de voûte peut pivoter en se rabattant sur l'une des parois dudit four.

13. Four électroménager selon l'une des revendications précédentes, dans lequel la profondeur de l'évaporateur est plus faible que la profondeur du four, de manière à ménager un espace, préférentiellement au fond du four, de passage privilégié de la vapeur produite par l'évaporateur.

14. Four électroménager selon l'une des revendications précédentes, **caractérisé en ce qu'**il comporte une indication du niveau d'eau présente dans l'évaporateur.
